# EUROPÄISCHE PATENTSCHRIFT

(11) **EP 3 165 419 B1**
(45) Veröffentlichungstag und Bekanntmachung des Hinweises auf die Patenterteilung: **25.04.2018**
(21) Anmeldenummer: 16195498.7
(22) Anmeldetag: 25.10.2016
(51) Int. Cl.: B60T 7/20, B60T 13/08, B60T 13/74

(54) **AUFLAUFBREMSANLAGE FÜR KRAFTFAHRZEUGANHÄNGER**
OVERRUN BRAKE FOR A TRAILER
FREIN D`INERTIE POUR REMORQUE

(30) Priorität: 05.11.2015 DE 102015014315
(43) Veröffentlichungstag der Anmeldung: 10.05.2017
(73) Patentinhaber: Knott GmbH, 83125 Eggstätt (DE)
(72) Erfinder: STRASSER, Josef, 83257 Gstadt am Chiemsee (DE); LURTZ, Hans-Georg, 83109 Großkarolinenfeld (DE)
(74) Vertreter: Bauer, Friedrich

(56) Entgegenhaltungen:
- EP-A1- 1 612 081
- EP-A2- 0 363 615
- DE-A1-102008 041 057
- DE-A1-102008 041 687
- DE-A1-102010 002 652
- DE-C1- 10 028 388
- DE-U1-202004 019 858
- DE-U1-202014 005 555
- DE-U1-202014 007 403

## Beschreibung

Die Erfindung betrifft eine Auflaufbremsanlage für Kraftfahrzeuganhänger wie beispielsweise Caravan- oder Bootsanhänger. Bei solchen Auflaufbremsanlagen werden beim Bremsen des Zugfahrzeugs die Radbremsen des Anhängers aktiviert, indem die Zugstange der Auflaufeinrichtung gegen die Rückstellkräfte der Radbremsen um einen gewissen Auflaufweg eingeschoben wird.

Aus der DE 20 2014 005 555 U1 ist eine Auflaufbremsanlage mit einer mechanischen Bremskraftübertragungseinrichtung in Form eines Bremsgestänges bekannt, über das beim Bremsen des Zugfahrzeugs die Radbremsen des Anhängers aktiviert werden. Dies erfolgt dadurch, dass eine Zugstange, welche in einem Deichselrohr längsverschiebbar gelagert ist, beim Bremsvorgang des Zugfahrzeugs aufgrund der trägen Masse weiter in das Deichselrohr eingeschoben wird, wobei dadurch ein Schwenkhebel verschwenkt wird, an dessen Ende das Bremsgestänge angeordnet ist.

Weiterhin ist aus der EP 1 308 358 A1 ein Rückfahrsystem für Auflaufbremsanlagen von Anhängern mit hydraulischer Bremskraftübertragungseinrichtung bekannt. Bei diesem Rückfahrsystem wird eine Rückwärtsfahrt des Anhängers über elektrische Rückwärtsfahrt-Signalgeber in der Form von Radsensoren erkannt, die im Fall einer Rückwärtsfahrt entsprechende elektrische Signale an eine Steuereinrichtung abgeben, um den Bremsdruck im Hydrauliksystem derart zu reduzieren, dass eine Rückwärtsfahrt ohne Behinderung durch die Bremsen ermöglicht wird.

Aus der DE 10 2010 002 652 A1 ist eine Auflaufbremsanlage gemäß dem Oberbegriff des Anspruchs 1 bekannt. Bei der dortigen Auflaufbremsanlage kann die Bremskraft entsprechend einer von Sensoren erkannten Fahrsituation mittels eines Aktors gehemmt oder reduziert werden, der beispielsweise im Drehpunkt eines Umlenkhebels oder im Bereich eines Ausgleichshebels der Bremskraftübertragungseinrichtung angreift. Weiterhin werden dort auch exzentrisch verstellbare Umlenkrollen beschrieben, um ein Bremsseil zu spannen oder zu lösen.

Aus der DE 10 2008 041 057 A1 ist es bekannt, sensorisch erfasste Bewegungserkennungssignale zur Ansteuerung eines Überlagerungsgetriebes zu verwenden, um eine Bremskraftübertragungseinrichtung in ihrer Länge zu modifizieren.

Aus der DE 10 2008 041 687 A1 ist es bekannt, dass hierfür rotatorische Übertragungsgetriebe, beispielsweise in Form eines Planetengetriebes, oder translatorische Übertragungsgetriebe verwendet werden können.

Der Erfindung liegt die Aufgabe zugrunde, eine Auflaufbremsanlage für Kraftfahrzeuganhänger zu schaffen, welche den Einsatz von elektrischen Rückwärtsfahrt-Signalgebern auch in Verbindung mit mechanischen Bremskraftübertragungseinrichtungen, insbesondere mit Bremsgestängen, ermöglicht.

Diese Aufgabe wird erfindungsgemäß durch eine Auflaufbremsanlage mit den Merkmalen des Anspruchs 1 gelöst. In den Unteransprüchen sind vorteilhafte Weiterbildungen der erfindungsgemäßen Auflaufbremsanlage angegeben.

Die erfindungsgemäße Auflaufbremsanlage für Kraftfahrzeuganhänger umfasst zumindest eine Radbremse und eine Steuereinheit, eine mechanische Bremskraftübertragungseinrichtung, die mit der zumindest einen Radbremse in Wirkverbindung steht, sowie ein Bewegungserkennungssystem zum Erkennen von Bewegungsinformationen wie Stillstand oder einer Bewegungsrichtung des Kraftfahrzeuganhängers. Das Bewegungserkennungssystem ist mit der Steuereinheit zum Signal- bzw. Datenaustausch verbunden. Die mechanische Bremskraftübertragungseinrichtung weist eine lösbare Kupplungseinrichtung auf, die von der Steuereinheit in Abhängigkeit der von dem Bewegungserkennungssystem erzeugten Bewegungsinformationen derart ansteuerbar ist, dass sie entweder einen Kraftübertragungszustand oder einen Lösezustand einnimmt. Die Kupplungseinrichtung umfasst ein erstes und zweites Kupplungsteil, die im Kraftübertragungszustand die Bremskraft an die zumindest eine Radbremse weiterleiten, während sie im Lösezustand die Bremskraft zur zumindest einen Radbremse verhindern. Die Kupplungseinrichtung umfasst einen von der Steuereinheit in Abhängigkeit der Bewegungsinformationen angesteuerten Elektromagneten, der in einem aktivierten Zustand das erste Kupplungsteil vom zweiten Kupplungsteil abhebt, wodurch die Kupplungseinrichtung in ihren Lösezustand gebracht wird.

Unter einer mechanischen Bremskraftübertragungseinrichtung wird eine Kraftübertragungseinrichtung verstanden, mit der das Übertragen der Bremskraft von einer Bremskrafterzeugungseinrichtung zu den Radbremsen durch mechanische Elemente, insbesondere durch ein Gestänge, Seile, Schwenkhebel etc., erfolgt. Die Bremskrafterzeugungseinrichtung ist dabei üblicherweise im vorderen Endbereich einer Anhängerdeichsel angeordnet und kann insbesondere aus einer in ein Deichselgehäuse einschiebbaren Zugstange oder einem Handbremshebel bestehen.

Die erfindungsgemäße Kupplungseinrichtung bietet die Möglichkeit, auch bei mechanischen Bremskraftübertragungseinrichtungen den Bewegungszustand des Kraftfahrzeuganhängers mittels eines elektrischen und/oder optischen Bewegungserkennungssystems zu erfassen und bei Rückwärtsfahrt trotz einer von der Auflaufbremsanlage bewirkten Betätigung der mechanischen Bremskraftübertragungseinrichtung die Bremskraft von den Radbremsen abzukoppeln. Dadurch, dass ein Bewegungserkennungssystem eingesetzt wird, das elektrisch verarbeitbare Signale oder Daten liefert, kann die Steuereinheit entscheiden, ob ein aktives Bremsen des Kraftfahrzeuganhängers gewünscht ist oder nicht und die Kupplungseinrichtung entsprechend steuern, so dass die Bremskraft an die Radbremsen weitergeleitet wird oder nicht.

Gemäß einem vorteilhaften Ausführungsbeispiel der erfindungsgemäßen Auflaufbremsanlage umfasst die Bremskraftübertragungseinrichtung ein erstes und ein zweites Kraftübertragungsteil. Ein erstes Ende des ersten Kraftübertragungsteils ist mit einem ersten Ende des ersten Kupplungsteils verbunden, während ein erstes Ende des zweiten Kraftübertragungsteils mit einem ersten Ende des zweiten Kupplungsteils verbunden ist. Ein zweites Ende des zweiten Kraftübertragungsteils ist dabei mittelbar oder unmittelbar mit der zumindest einen Radbremse verbunden. Unter einer "mittelbaren" Verbindung ist zu verstehen, dass an das zweite Kraftübertragungsteil beispielsweise noch andere mechanische Elemente, insbesondere ein oder mehrere Bowdenzüge, angeschlossen sein können, der bzw. die das zweite Ende des zweiten Kraftübertragungsteils mit der (den) Radbremse(n) verbindet (verbinden).

Gemäß einem vorteilhaften Ausführungsbeispiel der erfindungsgemäßen Auflaufbremsanlage sind das erste Kupplungsteil und das zweite Kupplungsteil in axialer Richtung zueinander verschiebbar. Besonders vorteilhaft ist dabei, dass durch die axiale Verschiebung der Weg kompensiert werden kann, den die Zugstange innerhalb des Deichselrohrs zurücklegt bzw. dass der Weg kompensierbar ist, um den ein Bremsgestänge bzw. Bremsseil durch Verschwenken eines Schwenkhebels verschoben wird. In diesem Fall kann sich die Kupplungseinrichtung axial verlängern, wobei die Bremskraft einzig auf das erste Kupplungsteil und nicht auf das zweite Kupplungsteil wirkt. Die Bremskraft wird somit nicht auf die Radbremsen übertragen. Der Elektromagnet kann die beiden Kupplungsteile auseinanderdrücken oder -ziehen oder -drehen, wobei sie im Anschluss daran axial zueinander verschoben werden können. Vorteilhaft ist, dass die Kupplungseinrichtung ohne Einsatz von Hydraulikfluid auskommt.

Gemäß einer vorteilhaften Ausführungsform der erfindungsgemäßen Auflaufbremsanlage umfasst das erste Kupplungsteil der Kupplungseinrichtung eine erste Kontaktfläche und das zweite Kupplungsteil eine zweite Kontaktfläche. Beide Kontaktflächen liegen einander gegenüber und sind relativ zueinander zwischen einer aufeinanderliegenden Kontaktposition und einer beabstandeten Löseposition bewegbar. Die Kontaktflächen können somit miteinander form- und/oder reibschlüssig in Kontakt gebracht und voneinander getrennt werden.

Vorteilhafterweise ist die erste Kontaktfläche mit einer sägezahnartigen Kontur versehen, die sich in Längsrichtung erstreckt und mehrere Sägezähne aufweist, die in eine bestimmte Längsrichtung zeigen. Die zweite Kontaktfläche ist ebenfalls mit einer sägezahnartigen Kontur versehen, die sich in Längsrichtung erstreckt und mehrere Sägezähne aufweist, die in eine entgegengesetzte Richtung wie die Sägezähne der ersten Kontaktfläche zeigen. Im Kraftübertragungszustand greifen die Sägezähne der ersten und zweiten Kontaktfläche derart ineinander, dass eine Kraft in Axialrichtung der angrenzenden Kraftübertragungsteile (11₁, 11₂)übertragbar ist. Hierdurch kann die Bremskraft auf einfache Weise über das Bremskraftübertragungssystem hin zur Radbremse übertragen werden.

Vorteilhafterweise umfasst die Kupplungseinrichtung zumindest eine Spannfeder, die mit einem ersten Ende am ersten Kupplungsteil und mit einem zweite Ende am zweiten Kupplungsteil befestigt ist und sich derart schräg über beide Kupplungsteile (22, 23) erstreckt, dass sie sowohl eine Kraft in Längsrichtung der Bremskraftübertragungseinrichtung (11) als auch eine Kraft ausübt, welche die Kupplungsteile (22, 23) in den Kraftübertragungszustand drängt.

Eine solche Spannfeder bewirkt, dass im Kraftübertragungszustand die Kontaktflächen der beiden Kupplungsteile zusammengespannt werden, so dass sie die Bremskraft ohne Relativverschiebung übertragen können. Vorteilhafterweise ist dabei die Spannfeder im ersten oder letzten Drittel bzw. Viertel bzw. Fünftel des entsprechenden Kupplungsteils angeordnet.

Gemäß einer weiteren vorteilhaften Ausführungsform der erfindungsgemäßen Auflaufbremsanlage umfasst das erste Kupplungsteil eine sich in Längsrichtung erstreckende längliche Führungsausnehmung. Mit dem zweiten Kupplungsteil ist ein erstes Ende eines Führungsstifts verbunden, wobei sich der Führungsstift durch die Führungsausnehmung des ersten Kupplungsteils hindurch erstreckt. Der Elektromagnet ist mit einem zweiten Ende des Führungsstifts verbunden. Umgekehrt könnte die Führungsausnehmung im zweiten Kupplungsteil angeordnet und der Führungsstift mit seinem ersten Ende mit dem ersten Kupplungsteil verbunden sein.

Hierdurch können auf einfache Weise das erste und zweite Kupplungsteil durch den Elektromagneten voneinander abgehoben werden. Sobald die Kontaktflächen nicht mehr ineinandergreifen, können beide Kupplungsteile axial gegeneinander verschoben werden, wobei sie durch den innerhalb der Führungsausnehmung entlanggleitenden Führungsstift relativ zueinander geführt sind. Der Elektromagnet wird dann aktiviert, wenn eine Bremskraft, die zwar in die Bremskraftübertragungseinrichtung eingeleitet wird, nicht an die Radbremse übertragen werden soll. Nach dem Deaktivieren des Elektromagneten werden die Kupplungsteile wieder zusammengeführt, so dass sie in den Kraftübertragungszustand zurückkehren.

Gemäß einer vorteilhaften Ausführungsform der erfindungsgemäßen Auflaufbremsanlage ist eine Feder zwischen dem Elektromagneten und demjenigen Kupplungsteil angeordnet, welches die Führungsausnehmung umfasst, wobei eine Federkraft der Feder der Kraft des Elektromagneten entgegenwirkt, wodurch bei deaktiviertem Elektromagneten das erste bzw. zweite Kupplungsteil in Richtung des zweiten bzw. ersten Kupplungsteils gedrückt wird.

Besonders bevorzugt erstreckt sich der Führungsstift durch die Feder hindurch und ist als Stützeinrichtung für die Feder ausgebildet. Hierdurch wird die Feder zusätzlich derart gestützt, dass sie nicht seitlich abknicken kann.

Verschiedene Ausführungsbeispiele werden nachfolgend unter Bezugnahme auf die Zeichnung beispielhaft beschrieben. Gleiche Gegenstände weisen dieselben Bezugszeichen auf. Die entsprechenden Figuren der Zeichnungen zeigen im Einzelnen:
- Figur 1A:: eine schematische Darstellung der erfindungsgemäßen Auflaufbremsanlage mit einer Kupplungseinrichtung, wobei sich die Kupplungseinrichtung in einem Kraftübertragungszustand befindet;
- Figur 1B:: eine schematische Darstellung der Kupplungseinrichtung aus Figur 1A;
- Figur 2:: eine Draufsicht auf die erfindungsgemäße Auflaufbremsanlage aus Figur 1A;
- Figur 3:: eine räumliche Ansicht einer Deichsel der Auflaufbremsanlage in explosiver Darstellung;
- Figur 4:: eine räumliche Ansicht der Kupplungseinrichtung in explosiver Darstellung;
- Figuren 5A: und 5B: eine räumliche Ansicht der Kupplungseinrichtung in explosiver Darstellung, wobei sich die Kupplungseinrichtung in einem Kraftübertragungszustand befindet;
- Figuren 5C: und 5D: eine räumliche Ansicht der Kupplungseinrichtung in explosiver Darstellung, wobei sich die Kupplungseinrichtung in einem Lösezustand befindet;
- Figuren 6A, 7A:: schematische Darstellungen der erfindungsgemäßen Auflaufbremsanlage mit einer Kupplungseinrichtung, wobei sich die Kupplungseinrichtung in einem Lösezustand befindet;
- Figuren 6B, 7B:: die Einzelheit 6B bzw. 7B der Kupplungseinrichtung aus den Figuren 6A bzw. 7A, in vergrößerter Darstellung
- Figuren 8A, 9A:: schematische Darstellungen des vorderen Bereichs der erfindungsgemäßen Auflaufbremsanlage; und
- Figuren 8B, 9B, 9C:: schematische vergrößerte Darstellungen der Kupplungseinrichtung aus den Figuren 8A bzw. 9A.

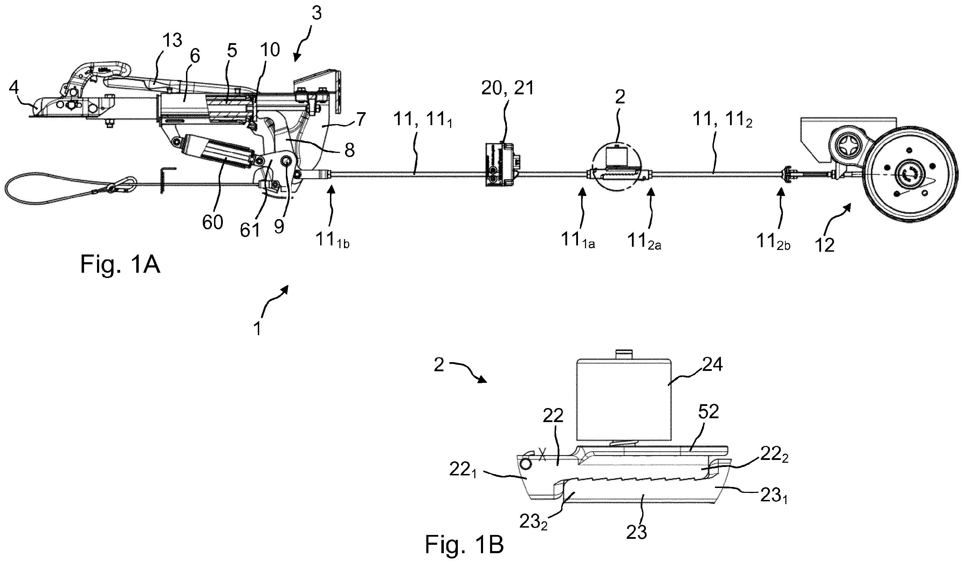

Fig. 1A zeigt eine schematische Darstellung einer erfindungsgemäßen Auflaufbremsanlage 1, die eine Kupplungseinrichtung 2 umfasst, welche sich in einem Kraftübertragungszustand befindet. In Fig. 1B ist die Kupplungseinrichtung 2 vergrößert dargestellt. Die Auflaufbremsanlage 1 von Fig. 1A weist eine Deichsel 3 mit einer Zugkugelkupplung 4 auf, die mit einem Kugelkopf eines Zugfahrzeugs (nicht dargestellt) gekuppelt werden kann. Die Zugkugelkupplung 4 ist fest mit einer Zugstange 5 verbunden, welche in einem Deichselrohr 6 längsverschiebbar gelagert ist. Bremst das Zugfahrzeug, wird die Zugstange 5 aufgrund der trägen Masse des Fahrzeuganhängers in das Deichselrohr hineingeschoben und ein Bremsvorgang ausgelöst. Das Deichselrohr 6 ist dabei an einer Haltekonsole 7 der Deichsel 1 befestigt. An der Haltekonsole 7 ist weiterhin ein Kraftübertragungselement in Form eines Übersetzungs- bzw. Schwenkhebels 8 mittels eines Schwenklagers schwenkbar um die Schwenkachse 9 gelagert. Der in seinem oberen Bereich nach vorne (also in Richtung des Zugfahrzeugs) gekrümmte Schwenkhebel 8 liegt mit seinem vorderen Ende an einer Druckplatte 10 der Zugstange 5 an. Wird die Zugstange 5 beim Bremsvorgang nach rechts verschoben, bewirkt diese Verschiebung ein Verschwenken des Schwenkhebels 8 im Uhrzeigersinn um die Schwenkachse 9 herum, wodurch ein unterhalb der Schwenkachse 9 am Schwenkhebel 8 angelenktes Bremsgestänge 11 nach vorne gezogen wird. Über dieses Bremsgestänge 11, welches ebenso alternativ ein Bremsseil sein kann bzw. hier generell als mechanische Bremskraftübertragungseinrichtung 11 bezeichnet wird, wird bei einem Bremsvorgang zumindest eine Radbremse 12 des Fahrzeuganhängers im normalen Fahrbetrieb betätigt. Zweckmäßigerweise werden die auf beiden Seiten des Fahrzeuganhängers vorgesehenen Radbremsen 12 gleichzeitig betätigt.

Die Bremskraftübertragungseinrichtung 11 kann auch durch Hochschwenken eines Handbremshebels 13 nach vorne gezogen werden.

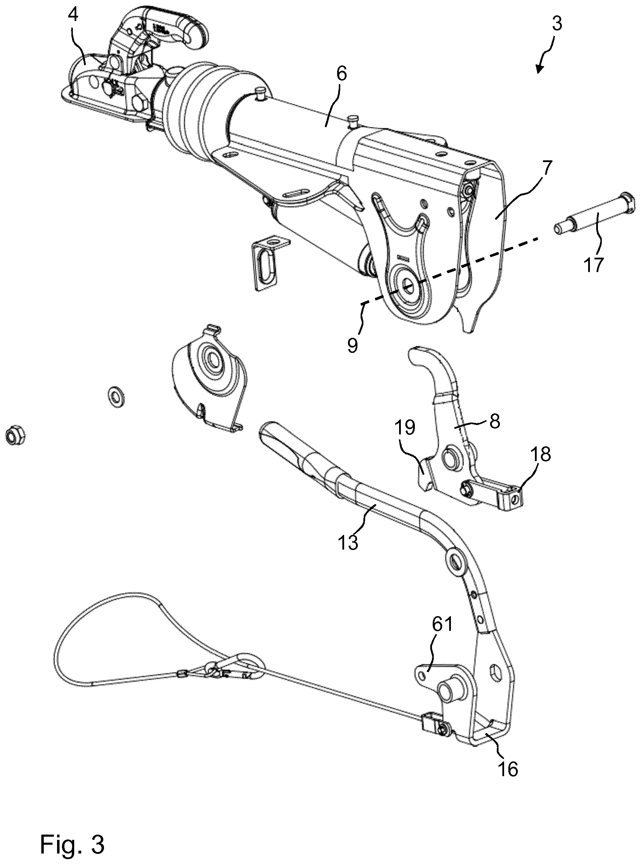

In diesem Zusammenhang wird auch auf Fig. 3 verwiesen, welche den Aufbau des vorderen Teils der Deichsel 3 anschaulich zeigt. Das Deichselrohr 6 ist mit der Haltekonsole 7 fest verbunden. Der Handbremshebel 13 ist um die gleiche Schwenkachse 9 wie auch der Schwenkhebel 8 schwenkbar. Unterhalb der Schwenkachse 9 ist am Schwenkhebel 8 ein Befestigungselement 18 angelenkt, an welchem die Bremskraftübertragungseinrichtung 11 befestigt ist. Der Schwenkhebel 8 weist unterhalb seiner Schwenkachse 9 außerdem eine Mitnehmernase 19 auf, mit welcher ein Anschlag 16 des Handbremshebels 13 in Kontakt bringbar ist. Wird der Handbremshebel 13 hochgeschwenkt, schwenkt der Anschlag 16, welcher sich ebenfalls unterhalb der Schwenkachse 9 befindet, nach vorne in Richtung des Zugfahrzeugs, kommt dabei in Kontakt mit der Mitnehmernase 19 des Schwenkhebels 8 und nimmt diese mit. Der Schwenkhebel 8 wird daher im Uhrzeigersinn verschwenkt, wodurch die Bremskraftübertragungseinrichtung 11, bei welcher es sich vorzugsweise um ein Bremsgestänge 11 handelt, nach vorne gezogen wird. Für den Fall, dass der Handbremshebel 13 nicht betätigt wird, er sich also in dem in Fig. 1A gezeigten Zustand befindet, bewirkt der Anschlag 16 des Handbremshebels 13 dagegen kein Schwenken des Schwenkhebels 8 in die Bremsstellung. Ein die Schwenkachse 9 bildender Bolzen 17 durchsetzt vorzugsweise sowohl die Haltekonsole 7 als auch den Schwenkhebel 8 und den Handbremshebel 13.

In Fig. 1A ist weiterhin ein Bewegungserkennungssystem 20 dargestellt, welches vorzugsweise eine Radareinheit aufweist. Die zumindest eine Radareinheit des Bewegungserkennungssystems 20 gibt einen Strahlenkegel ab, der vorzugsweise schräg nach hinten in Richtung einer Fahrbahnoberfläche gerichtet ist. Eine Hauptkeule der Radareinheit trifft in einem Winkel von 30° bis 60°, bevorzugt 40° bis 50°, weiter bevorzugt mit 45° auf die Fahrbahnoberfläche auf.

Wie aus Fig. 1A ersichtlich, weist die Auflaufbremsanlage 1 eine Steuereinheit 21 auf. Die Steuereinheit 21 und das Bewegungserkennungssystem 20 befinden sich im gleichen Gehäuse. Dies ist allerdings nicht zwingend. Das Bewegungserkennungssystem 20 dient zum Erkennen von Bewegungsinformationen, wie beispielsweise, ob der Kraftfahrzeuganhänger stillsteht oder sich in Vorwärts- bzw.

Rückwärtsrichtung bewegt. Diese Informationen übermittelt das Bewegungserkennungssystem 20 an die Steuereinheit 21.

Die Steuereinheit 21 ist wiederum mit der Kupplungseinrichtung 2 derart verbunden, dass Signale oder Daten elektrisch oder optisch oder mittels Funkwellen von der Steuereinheit 21 zur Kupplungseinrichtung 2 übertragen werden können.

Die Steuereinheit 21 ist derart ausgebildet, dass sie anhand der von dem Bewegungserkennungssystem 20 erhaltenen Bewegungsinformationen die Kupplungseinrichtung 2 derart steuert, dass diese von einem Kraftübertragungszustand, in dem die Bremskraft an die Radbremsen 12 weitergeleitet wird, in einen Lösezustand bringbar ist, in welchem die Übertragung der Bremskraft zu den Radbremsen 12 unterbunden ist.

Soll der Kraftfahrzeuganhänger mittels des Zugfahrzeugs zurückgesetzt werden, dürfen die Radbremsen 12 auch bei einem Einschieben der Zugstange 5 in das Deichselrohr 6 nicht aktiviert werden. Das Zurücksetzen wird von der Steuereinheit 21 bemerkt, wobei diese im Folgenden die Kupplungseinrichtung 2 derart ansteuert, dass eine durch den Schwenkhebel 8 initiierte Axialbewegung eines ersten oder vorderen Kraftübertragungsteils 11₁ der Bremskraftübertragungseinrichtung 11 keinen Bremsvorgang an den Radbremsen 12 auslöst.

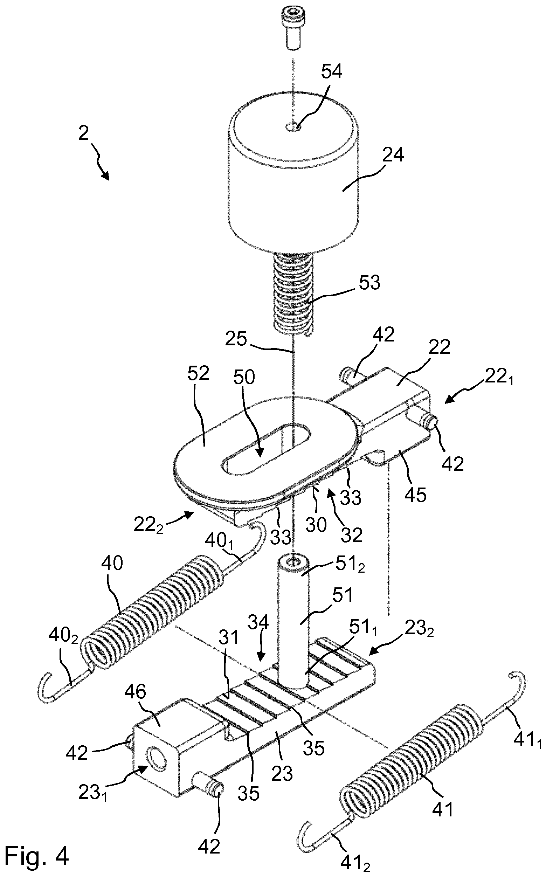

Der Aufbau der Kupplungseinrichtung 2 geht im Detail aus Fig. 4 hervor, welche eine Kupplungseinrichtung 2 in Explosionsdarstellung zeigt. Die Kupplungseinrichtung 2 ist mehrteilig ausgebildet und umfasst ein erstes Kupplungsteil 22 und ein zweites Kupplungsteil 23. Zusätzlich umfasst die Kupplungseinrichtung 2 noch einen Elektromagneten 24. In dem Ausführungsbeispiel von Fig. 4 ist der Elektromagnet 24 als Hubmagnet ausgebildet. Er könnte allerdings auch als Druckmagnet ausgebildet sein, um beide Kupplungsteile 22, 23 voneinander zu trennen. Er könnte ebenfalls eine Drehbewegung zwischen beiden Kupplungsteilen 22, 23 bewirken, um diese voneinander zu trennen.

Wie aus Fig. 1A ersichtlich, ist die Bremskraftübertragungseinrichtung 11 zweiteilig ausgebildet. Sie umfasst das erste Kraftübertragungsteil 11₁ und ein zweites Kraftübertragungsteil 11₂. Ein erstes Ende 11₁ₐ des ersten Kraftübertragungsteils 11₁ der Bremskraftübertragungseinrichtung 11 ist mit einem ersten Ende 22₁ des ersten Kupplungsteils 22 verbunden. Ein erstes Ende 11₂ₐ des zweiten Kraftübertragungsteils 11₂ der Bremskraftübertragungseinrichtung 11 ist mit einem ersten Ende 23₁ des zweiten Kupplungsteils 23 verbunden.

Ein zweites Ende 11_{1b} des ersten Kraftübertragungsteils 11₁ der Bremskraftübertragungseinrichtung 11 ist mit dem Befestigungselement 18 am Schwenkhebel 8 verbunden.

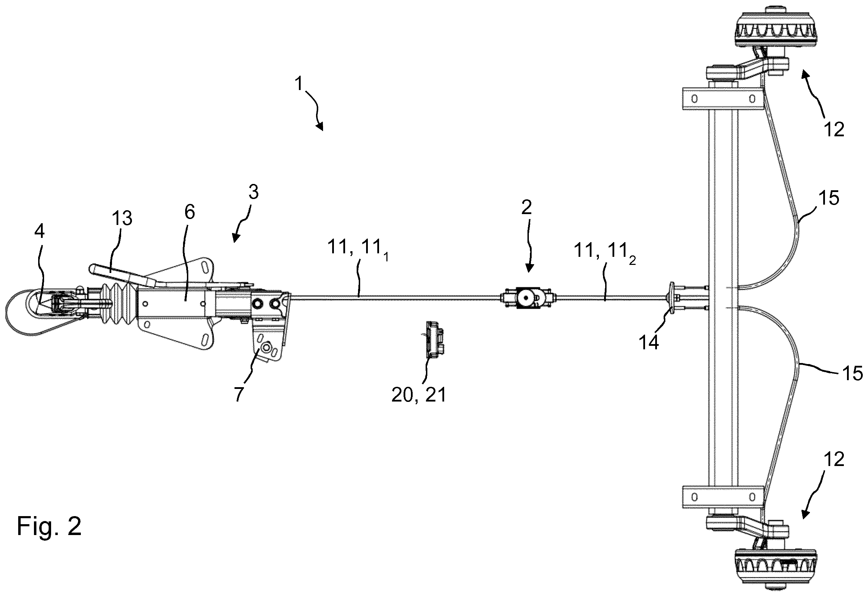

Ein zweites Ende 11_{2b} des zweiten Kraftübertragungsteils 11₂ der Bremskraftübertragungseinrichtung 11 ist mittelbar mit den Radbremsen 12 verbunden. Dieser Sachverhalt ist beispielsweise Fig. 2 zu entnehmen. Unter einer mittelbaren Verbindung ist beispielsweise zu verstehen, dass das zweite Ende 11_{2b} des zweiten Kraftübertragungsteils 11₂ der Bremskraftübertragungseinrichtung 11 nicht direkt mit den Radbremsen 12 verbunden ist, sondern, wie beispielsweise in Fig. 2 gezeigt, an einer Ausgleichswaage 14 befestigt ist, die mit Zugseilen von Bowdenzügen zusammenwirkt, die zu den Radbremsen 12 geführt sind.

Aus Fig. 2, welche eine Draufsicht auf die erfindungsgemäße Auflaufbremsanlage 1 zeigt, ist ersichtlich, dass das Bewegungserkennungssystem 20 zusammen mit der Steuereinheit 21 seitlich versetzt zu der Kupplungseinrichtung 2 angeordnet ist. Eine mittige Anordnung wäre jedoch ebenfalls ohne weiteres möglich.

Das erste Kupplungsteil 22 und das zweite Kupplungsteil 23 der Kupplungseinrichtung 2 sind in axialer Richtung zueinander und damit in Längsrichtung der Bremskraftübertragungseinrichtung 11 verschiebbar. Der maximal mögliche axiale Verschiebweg ist dabei so bemessen, dass der gesamte Weg, um den das erste Kraftübertragungsteil 11₁ des Bremsgestänges 11 verschiebbar ist, hierdurch kompensiert werden kann. Alternativ kann es ausreichend sein, wenn bereits zwei Drittel des Weges, um den das Bremsgestänge 11 verschoben werden kann, kompensiert werden können.

Das erste Kupplungsteil 22 der Kupplungseinrichtung 2 umfasst eine erste Kontaktfläche 30 und das zweite Kupplungsteil 23 der Kupplungseinrichtung 2 umfasst eine zweite Kontaktfläche 31. Beide Kontaktflächen 30, 31 sind aufeinander zu gerichtet und in Kraftübertragungszustand miteinander in Kontakt.

Die erste Kontaktfläche 30 ist mit einer sägezahnartigen Kontur 32 versehen, die sich in Längsrichtung erstreckt und mehrere Sägezähne 33 aufweist. Gleiches gilt auch für die zweite Kontaktfläche 31, welche mit einer sägezahnartigen Kontur 34 versehen ist, die sich in Längsrichtung erstreckt und mehrere Sägezähne 35 aufweist. In dem Kraftübertragungszustand greifen die Sägezähne 33 der ersten Kontaktfläche 30 in die Sägezähne 35 der zweiten Kontaktfläche 31 ein. Die Sägezähne 33, 35 der beiden Kontaktflächen 30, 31 haben zweckmäßigerweise die gleiche Zahngröße und Zahnform.

Die Sägezähne 33, 35 sind derart ausgerichtet, dass im Kraftübertragungszustand, also wenn die erste und zweite Kontaktfläche 30, 31 ineinandergreifen, die Kupplungseinrichtung 2 sich in axialer Richtung nicht verlängern kann. Wie noch erläutert wird, kann sie sich allerdings verkürzen. In den Fig. 4 und 1A weist eine ansteigende Flanke der Sägezähne 33 des ersten Kupplungsteils 22 vom ersten Ende 22₁ in Richtung eines zweiten Endes 22₂ eine größere Steigung auf, als eine vom ersten Ende 22₁ in Richtung des zweiten Endes 22₂ abfallende Flanke.

Gleiches gilt auch für das zweite Kupplungsteil 23. Eine vom ersten Ende 23₁ in Richtung eines zweiten Endes 23₂ ansteigende Flanke der Sägezähne 35 der sägezahnartigen Kontur 34 weist eine größere Steigung auf als eine vom ersten Ende 23₁ in Richtung des zweiten Endes 23₂ abfallende Flanke.

Die beiden Flanken eines jeden Sägezahns 33, 35 haben daher unterschiedliche Steigungen.

Es ist auch möglich, dass die Steigungen umgekehrt verlaufen. Vorzugsweise ist die ansteigende bzw. abfallende Flanke der Sägezähne 33 der sägezahnartigen Kontur 32 des ersten Kupplungsteils 22 derart bemessen, dass die steilere Steigung einen Winkel zu einer Senkrechten 25, die durch das erste Kupplungsteil 22 verläuft, aufweist, der in etwa dem arctan des Reibwerts entspricht, den die Sägezähne 33 besitzen. Für den Fall, das der Reibwert den Wert 0,12 besitzt, was beim Anliegen von Stahl an Stahl der Fall wäre und noch optional ein Schmiermittel dazwischen aufgebracht wird, beträgt der Winkel ca. 5 bis 8°, vorzugsweise 6 bis 8°, weiter vorzugsweise 7 bis 8°.

Gleiches gilt auch für die ansteigende bzw. fallende Flanke der Sägezähne 35 der sägezahnartigen Kontur 34 des zweiten Kupplungsteils 23. Auch hier gilt, dass die steilere Steigung derart bemessen ist, dass diese zu einer Senkrechten 25, die durch das zweite Kupplungsteil 23 verläuft, einen Winkel bildet, der in etwa dem arctan des Reibwerts entspricht, den die Sägezähne 35 aufweisen.

Der Winkel der flacheren Steigung ist um den Faktor zwei, vorzugsweise um den Faktor drei, weiter vorzugsweise um den Faktor vier größer als der Winkel der steileren Steigung.

Die Kupplungseinrichtung 2 umfasst außerdem zumindest eine Spannfeder 40. In Ausführungsbeispiel von Fig. 4 sind zwei gleichartige Spannfedern 40, 41 auf gegenüberliegenden Seiten der Kupplungseinrichtung 2 vorgesehen. Ein erstes Ende 40₁ der Spannfeder 40 ist mit dem ersten Ende 22₁ des ersten Kupplungsteils 22 verbunden. Ein zweites Ende 40₂ der Spannfeder 40 ist mit dem ersten Ende 23₁ des zweiten Kupplungsteils 23 in einem diagonal gegenüberliegenden Seitenbereich des zweiten Kupplungsteils 23 verbunden. Die Spannfeder 40 ist derart ausgebildet, dass sie die beiden Kupplungsteile 22, 23 aufeinander zu ziehen möchte.

Gemäß Fig. 4 ist noch eine weitere Spannfeder 41 vorgesehen, die ein erstes Ende 41₁ und ein zweites Ende 41₂ umfasst. Das erste Ende 41₂ der weiteren Spannfeder 41 ist mit dem ersten Ende 22₁ des ersten Kupplungsteils 22 in einem Seitenbereich verbunden. Ein zweites Ende 41₂ der weiteren Spannfeder 41 ist mit dem ersten Ende 23₁ des zweiten Kupplungsteils 23 verbunden.

Wie aus Fig. 4 ersichtlich, weisen das erste Kupplungsteil 22 und das zweite Kupplungsteil 23 Befestigungsvorsprünge in Form von Befestigungsstiften 42 auf, an denen die ersten bzw. zweiten Enden 40₁, 40₂, bzw. 41₁, 41₂ der Spannfedern 40, 41 befestigt sind.

Das erste Ende 22₁ des ersten Kupplungsteils 22 weist außerdem einen ersten Anschlag 45 auf, der in Richtung des zweiten Kupplungsteils 23 gerichtet und in Kontakt mit einem zweiten Ende 23₂ des zweiten Kupplungsteils 23 bringbar ist. Alternativ oder in Ergänzung dazu weist das erste Ende 23₁ des zweiten Kupplungsteils 23 einen zweiten Anschlag 46 auf, der in Richtung des ersten Kupplungsteils 22 gerichtet und in Kontakt mit einem zweiten Ende 22₂ des ersten Kupplungsteils 22 bringbar ist. Der erste bzw. zweite Anschlag 45, 46 befindet sich dann in Kontakt mit dem jeweiligen zweiten Ende 22₂, 23₂, wenn die Kupplungseinrichtung 2 in axialer Richtung die kleinste Länge aufweist.

Um sicherzustellen, dass das erste Kupplungsteil 22 und das zweite Kupplungsteil 23 beim axialen Verschieben seitlich geführt werden, weist in diesem Ausführungsbeispiel das erste Kupplungsteil 22 eine das erste Kupplungsteil 22 durchsetzende längliche Führungsausnehmung 50 auf, die sich in Längsrichtung des ersten Kupplungsteils 22 erstreckt.

Weiterhin umfasst die Kupplungseinrichtung 2 einen Führungsstift 51. Ein erstes Ende 51₁ des Führungsstifts 51 ist mit dem zweiten Kupplungsteil 23 verbunden. Der Führungsstift 51 ragt durch die Führungsausnehmung 50 des ersten Kupplungsteils 22 hindurch. Der Elektromagnet 24 ist an einem zweiten Ende 51₂ des Führungsstifts 51 angeordnet. In dem Ausführungsbeispiel von Fig. 4 weist der Elektromagnet 24 eine mittige Bohrung 54 auf, durch die eine Schraube eingeführt werden kann, die mit dem zweiten Ende 51₂ des Führungsstifts 51 verbunden wird. Dadurch ist der Elektromagnet 24 unverschiebbar am zweiten Ende 51₂ des Führungsstifts 50 angeordnet bzw. an diesem abgestützt und weist einen konstanten Abstand zum zweiten Kupplungsteil 23 auf.

Es wäre auch möglich, dass die Führungsausnehmung 50 am zweiten Kupplungsteil 23 angeordnet ist und dass der Führungsstift 51 mit seinem ersten Ende 51₁ am ersten Kupplungsteil 22 angeordnet ist.

Das erste Kupplungsteil 22 umfasst eine ferromagnetische Schicht 52. Diese ferromagnetische Schicht 52 ist vorzugsweise um die Führungsausnehmung 50 herum angeordnet und bildet einen Teil der Oberfläche des ersten Kupplungsteils 22. Es wäre allerdings auch möglich, dass die ferromagnetische Schicht 52 innerhalb des ersten Kupplungsteils 22 ausgebildet ist. Es ist auch möglich, dass die Sägezähne 33 und damit die erste Kontaktfläche 30 die ferromagnetische 52 beinhaltet. Wird der Elektromagnet 24 bestromt, zieht er das erste Kupplungsteil 22 zu sich heran, wodurch sich das erste Kupplungsteil 22 vom zweiten Kupplungsteil 23 abhebt. Der Zeitpunkt, wann der Elektromagnet 24 bestromt und wie lange der Elektromagnet 24 bestromt wird, kann von der Steuereinheit 21 vorgegeben werden.

Die Kupplungseinrichtung 2 umfasst außerdem noch eine Feder 53, die zwischen dem Elektromagneten 24 und dem ersten Kupplungsteil 22 angeordnet ist. Die Federkraft der Feder 53 wirkt der Kraft des Elektromagneten 24 entgegen. Bei deaktiviertem Elektromagnet 24 wird daher das erste Kupplungsteil 22 in Richtung des zweiten Kupplungsteils 23 gedrückt. Auch die Spannfedern 40, 41 üben eine Kraft auf das erste Kupplungsteil 22 und zweite Kupplungsteil 23 aus, die eine Komponente in Axialrichtung und eine Komponente senkrecht zur Axialrichtung aufweist, wodurch das erste Kupplungsteil 22 zusätzlich in Richtung des zweiten Kupplungsteils 23 gezogen wird.

Bei der Feder 53 handelt es sich vorzugsweise um eine Schraubenfeder, wobei durch die Feder 53 vorzugsweise der Führungsstift 51 verläuft, welcher der Feder 53 gleichzeitig als Stützeinrichtung dient, damit diese nicht zur Seite hin abknicken kann.

Aus den Fig. 1A, 1B ist entnehmbar, dass ein erstes Ende 11₁ₐ des ersten Kraftübertragungsteils 11₁ der Bremskraftübertragungseinrichtung 11 am ersten Ende 22₁ des ersten Kupplungsteils 22 angeordnet ist. Ein erstes Ende 11₂ₐ des zweiten Kraftübertragungsteils 11₂ der Bremskraftübertragungseinrichtung 11 ist mit dem ersten Ende 23₁ des zweiten Kupplungsteils 23 verbunden. In Fig. 1A ist ein Zustand der Auflaufbremsanlage 1 gezeigt, die diese beispielsweise dann annimmt, wenn der Kraftfahrzeuganhänger in Vorwärtsrichtung bewegt wird. Das Bremsgestänge, also die Bremskraftübertragungseinrichtung 11, wird in diesem Zustand nicht in Richtung des Zugfahrzeugs bewegt. Die Radbremsen 12 sind nicht aktiviert. In diesem Zustand ist der Magnet durch die Steuereinheit 21 deaktiviert.

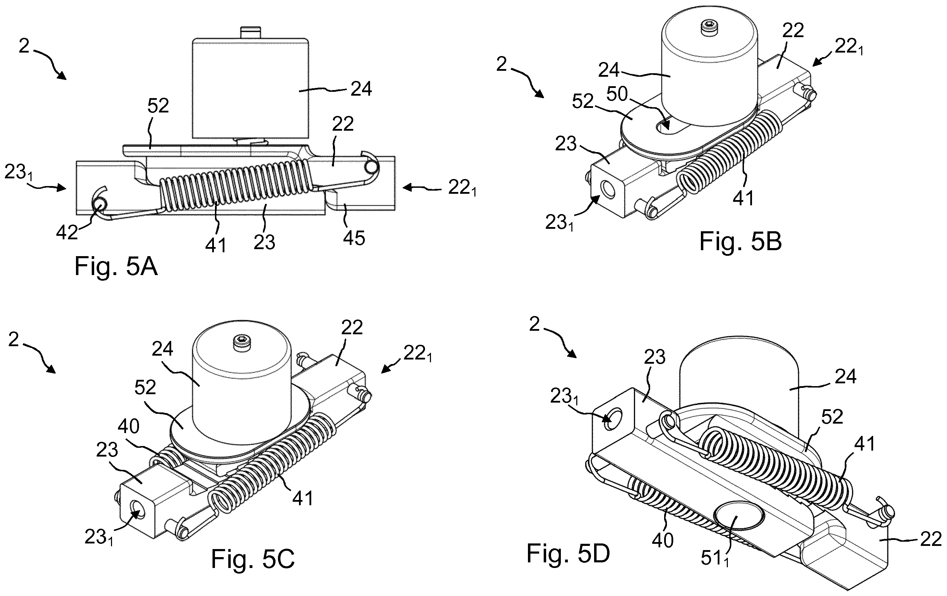

Die Fig. 5A und 5B zeigen verschiedene Darstellungen der Kupplungseinrichtung 2 bei deaktiviertem Elektromagneten 24. Die einzelnen Kupplungsteile 22, 23 befinden sich in einer Ausgangsposition, in der die Kupplungseinrichtung 2 ihre kürzeste axiale Länge hat.

Die Fig. 5C und 5D zeigen verschiedene Darstellungen der Kupplungseinrichtung 2 bei aktiviertem Elektromagneten 24, wobei das erste Kupplungsteil 22 vom zweiten Kupplungsteil 23 abgehoben wird und wobei beide Kupplungsteile 22, 23 in axialer Richtung gegeneinander derart verschoben sind, dass sich die Kupplungseinrichtung 2 verlängert.

In Fig. 5D ist das erste Ende 51₁ des Führungsstifts 51 zu sehen. Der Führungsstift 51 durchsetzt in diesem Ausführungsbeispiel das zweite Kupplungsteil 23 vollständig. Er könnte auch innerhalb einer Sackbohrung im zweiten Kupplungsteil 23 enden und dieses nicht vollständig durchsetzen.

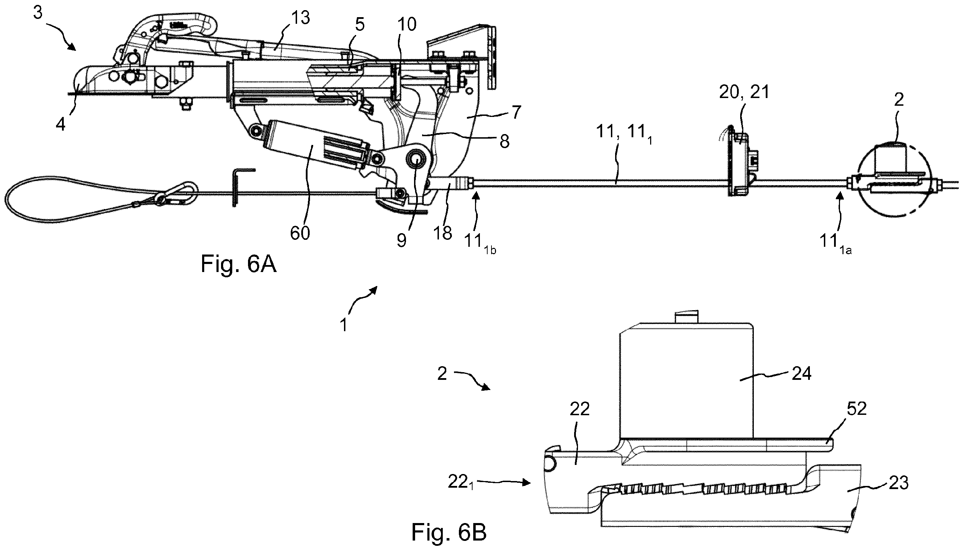

Die Fig. 6A zeigt eine weitere Darstellung der erfindungsgemäßen Auflaufbremsanlage 1 mit der Kupplungseinrichtung 2, wobei sich die Kupplungseinrichtung 2 in einem Lösezustand befindet. Fig. 6B zeigt eine vergrößerte Darstellung der Kupplungseinrichtung 2 aus Fig. 6A. Diesen Zustand nimmt die erfindungsgemäße Auflaufbremsanlage 1 beispielsweise dann an, wenn nach einem Bremsvorgang ein Stillstand erkannt wird, und dieser Stillstand eine vorbestimmte Zeit lang andauert. In diesem Fall steuert die Steuereinheit 21 den Elektromagneten 24 derart an, dass dieser das erste Kupplungsteil 22 von dem zweiten Kupplungsteil 23 abhebt. Das erste Kupplungsteil 22 ist allerdings nicht in axialer Richtung gegenüber dem zweiten Kupplungsteil 23 verschoben. Der Schwenkhebel 8 ist um seine Schwenkachse 9 um einen gewissen Winkelbereich verschwenkt.

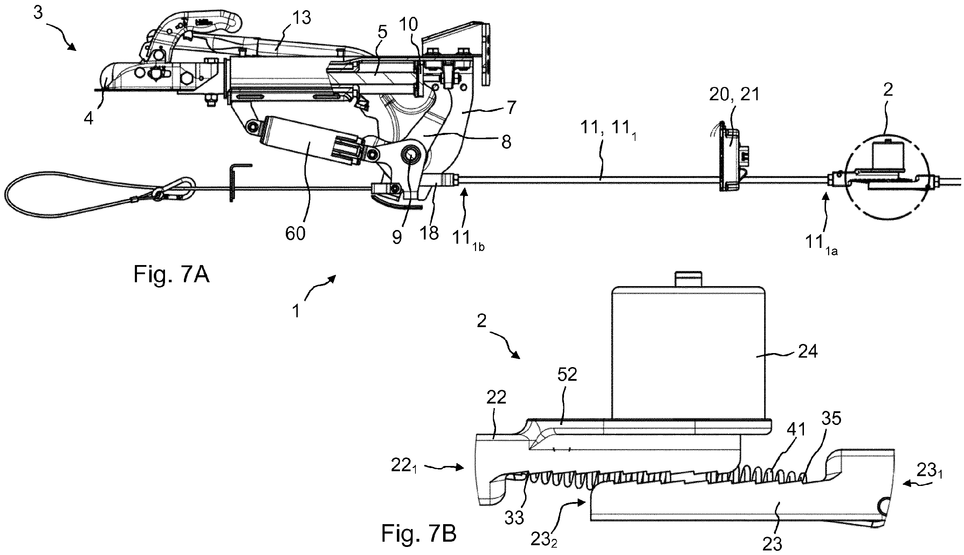

Fig. 7A zeigt eine weitere schematische Darstellung der erfindungsgemäßen Auflaufbremsanlage 1 mit der Kupplungseinrichtung 2, wobei die Kupplungseinrichtung 2 sich in einem Lösezustand befindet. Fig. 7B zeigt eine vergrößerte Darstellung der Kupplungseinrichtung 2 von Fig. 7A. Diesen Zustand nimmt die Auflaufbremsanlage 1 dann ein, wenn nach einem erkannten Stillstand eine Rückwärtsfahrt eingesetzt hat. In diesem Fall wird der Schwenkhebel 8 um seine Schwenkachse 9 stärker verschwenkt, so dass das erste Kraftübertragungsteil 11a der Bremskraftübertragungseinrichtung 11 weiter nach vorne gezogen wird. Dies trifft allerdings nicht für das zweite Kraftübertragungsteil 11₂ der Bremskraftübertragungseinrichtung 11 zu, weil beide Kraftübertragungsteile 11₁, 11₂ durch die Kupplungseinrichtung 2 derart voneinander entkoppelt sind, dass sich die Kraftübertragungsteile 11₁, 11₂ in axialer Richtung auseinander bewegen können und sich das Bremsgestänge entsprechend verlängert. Die Kraft der Spannfedern 40, 41 reicht dabei nicht aus, um auch das hintere Kraftübertragungsteil 11₂ nach vorne zu ziehen und die Radbremsen derart stark zu betätigen, dass eine Rückwärtsfahrt verhindert wird.

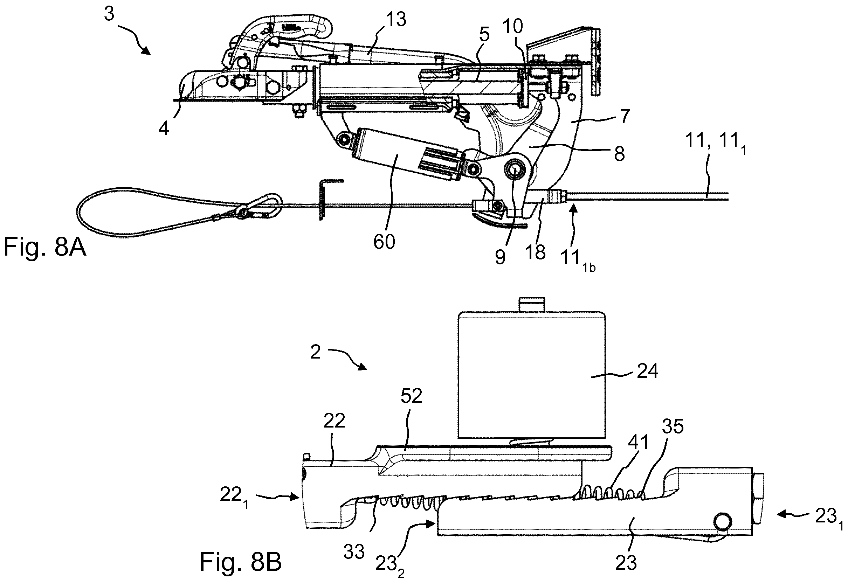

Fig. 8A zeigt eine weitere schematische Darstellung der erfindungsgemäße Auflaufbremsanlage 1 mit der Kupplungseinrichtung 2, wobei sich die Kupplungseinrichtung 2 nun in einem Kraftübertragungszustand befindet. Fig. 8B zeigt eine vergrößerte Darstellung der Kupplungseinrichtung 2 von Fig. 8A, welche in Fig. 8A nicht dargestellt ist. Die Auflaufbremsanlage 1 nimmt diesen Zustand dann ein, wenn die Steuereinheit 21 ein Ende der Rückwärtsfahrt erkannt hat. In diesem Fall wird der Elektromagnet 24 deaktiviert. Das erste und das zweite Kupplungsteil 22, 23 sind in diesem Zustand noch axial zueinander verschoben, d.h. die Kupplungseinrichtung 2 ist verlängert. Durch Absenken des ersten Kupplungsteils 22 auf das zweite Kupplungsteil 23 greift jedoch nun zumindest ein Teil der sägezahnartigen Kontur 32 des ersten Kupplungsteils 22 in die sägezahnartige Kontur 34 des zweiten Kupplungsteils 23 ein. In diesem Zustand ist es auch bei einer weiteren Schwenkbewegung des Schwenkhebels 8 im Uhrzeigersinn nicht möglich, dass sich die Kupplungseinrichtung 2 in axialer Richtung weiter verlängert.

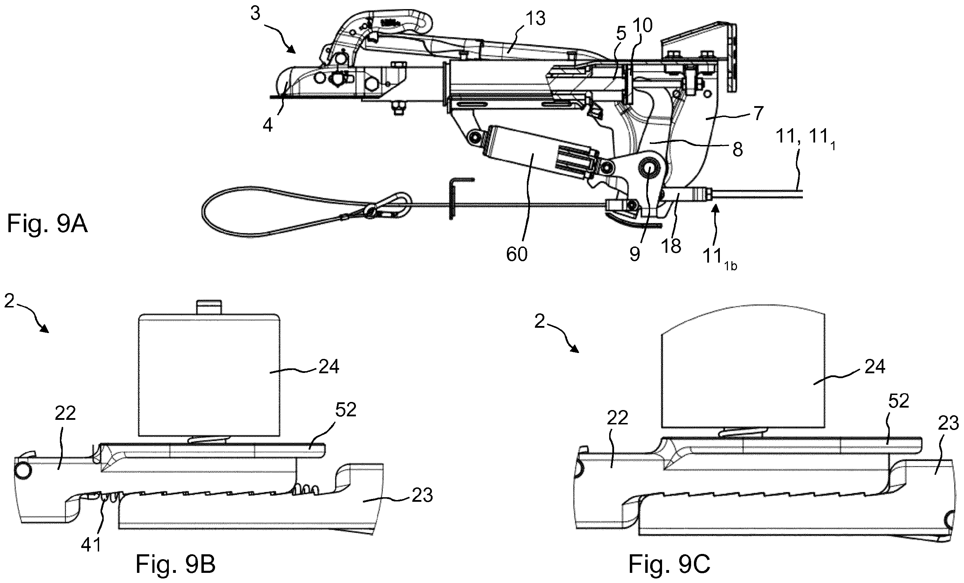

Fig. 9A zeigt eine weitere schematische Darstellung der erfindungsgemäßen Auflaufbremsanlage 1 mit der Kupplungseinrichtung 2, wobei sich die Kupplungseinrichtung 2 in einem Kraftübertragungszustand befindet. In den Fig. 9B und 9C ist die Kupplungseinrichtung 2 in verschiedenen Kupplungszuständen gezeigt. In Fig. 9B beginnt das Zugfahrzeug nach beendeter Rückwärtsfahrt wieder mit einer Vorwärtsfahrt, wobei diese in Fig. 9C schon länger andauert. Die Zugstange 5 übt keinen Druck mehr auf den Schwenkhebel 8 aus, so dass dieser nicht weiter im Uhrzeigersinn bewegt wird und das erste Kraftübertragungsteil 11₁ der Bremskraftübertragungseinrichtung 11 nicht weiter nach vorne zieht. Aufgrund der Spannfedern 40, 41 werden das erste Kupplungsteil 22 und das zweite Kupplungsteil 23 wieder in axialer Richtung aufeinander zubewegt. In Fig. 9C ist daher wiederum der Ausgangszustand der Kupplungseinrichtung 2 erreicht, welcher in Fig. 1B gezeigt ist. Aufgrund der Tatsache, dass eine Flanke der Sägezähne 33, 35 eine deutlich kleinere Steigung aufweist als die andere Flanke, kann sich die Kupplungseinrichtung 2 bei deaktiviertem Elektromagneten 24 zwar nicht verlängern, dafür allerdings verkürzen.

Die Kupplungseinrichtung 2 und deren Zusammenwirken mit dem Bewegungserkennungssystem 20 und der Steuereinrichtung 21 kann auch im Zusammehang mit dem Handbremshebel 13, d.h. mit der Feststellbremse, in vorteilhafter Weise eingesetzt werden.

Wie bereits in Hinblick auf Fig. 3 erläutert, kann durch Betätigen des Handbremshebels 13 der Schwenkhebel 8 im Uhrzeigersein verschwenkt werden, wodurch die Bremskraftübertragungseinrichtung 11 nach vorne gezogen wird, wodurch die Radbremsen 12 aktiviert werden. Die Betätigung des Handbremshebels 13 kann dabei durch einen beispielsweise in Fig. 1A dargestellten Federspeicher 60 unterstützt werden, der im dargestellten Ausführungsbeispiel als Druckzylinder ausgebildet und mit seinem vorderen Ende am Deichselrohr angelenkt ist, während sein hinteres Ende an einem abgewinkelten Endbereich 61 des Handbremshebels 13 angelenkt ist. Die Anlenkpunkte des Federspeichers 60 sind dabei relativ zur Schwenkachse 9 derart angeordnet, dass dann, wenn der Handbremshebel 13 geringfügig manuell aus der in Fig. 1A gezeigten Position soweit hoch geschwenkt wird, dass die Längsachse des Federspeichers 60 derart verläuft, dass sie oberhalb der Schwenkachse 9 liegt, der Federspeicher 60 den Handbremshebel 13 weiter in seine Bremsstellung schwenkt.

Ist der Kraftfahrzeuganhänger vom Zugfahrzeug getrennt und die Feststellbremse eingelegt, befindet sich die Kupplungseinrichtung 2 in der in Fig. 1B gezeigten Stellung, wobei jedoch (im Unterschied zu Fig. 1A) der Handbremshebel 13 hochgeschwenkt und das Bremsgestänge, d.h. die Bremskraftübertragungseinrichtung 11, sich in einer nach vorne gezogenen Position befindet.

Wird nun beim Ankuppeln des Kraftfahrzeuganhängers an das Zugfahrzeug versehentlich das Bewegungserkennungssystem 20 aktiviert, bevor der Kraftfahrzeuganhänger fest mit dem Zugfahrzeug verbunden ist, kann kurzzeitig die an sich unerwünschte Situation auftreten, dass das Bewegungserkennungssystem 20 einen Stillstand des Kraftfahrzeuganhängers erkennt und die Kupplungseinrichtung 2 in den Lösezustand bringt. In diesem Lösezustand werden die Kupplungsteile 22, 23 vom Elektromagneten 24 auseinander bewegt, so dass sich die Kupplungseinrichtung 2, wie in Figur 7B gezeigt, verlängern kann, wodurch auch das Bremsgestänge entsprechend auseinander gezogen wird. Dies hat zur Folge, dass die Radbremsen 12 kurzzeitig gelöst werden. Dieses Lösen der Radbremsen ist jedoch unproblematisch, da der Lösezustand nur eine sehr kurze Zeitdauer anhält, da der Federspeicher 60 den Wegverlust im Bremsgestänge sofort wieder selbstständig ausgleicht, indem er den Handbremshebel 13 und damit das Bremsgestänge weiter in die Bremsposition bewegt, bis die Radbremse 12 wieder betätigt werden kann. Wenn nun der Elektromagnet 24 deaktiviert wird, drücken bzw. ziehen die Federn 53, 40, 41 die beiden Kupplungsteile 22, 23 wieder zusammen.

Wird der Handbremshebel 13 gelöst, d.h. manuell in die in Fig. 1A gezeigte Stellung zurückgeschwenkt, werden die Kupplungsteile 22, 23 durch die Spannfedern 40, 41 wieder in ihre axiale Ausgangsstellung zurückgeführt, die in Fig. 1B gezeigt ist.

## Patentansprüche

1. Auflaufbremsanlage für Kraftfahrzeuganhänger mit:
- zumindest einer Radbremse (12);
- einer mechanischen Bremskraftübertragungseinrichtung (11), die mit der zumindest einen Radbremse (12) in Wirkverbindung steht;
- einer Steuereinheit (21);
- einem Bewegungserkennungssystem (20) zum Erkennen von Bewegungsinformationen wie Stillstand oder einer Bewegungsrichtung des Kraftfahrzeuganhängers;
- wobei das Bewegungserkennungssystem (20) mit der Steuereinheit (21) verbunden ist;
**gekennzeichnet durch** folgende Merkmale:
- die mechanische Bremskraftübertragungseinrichtung (11) weist eine lösbare Kupplungseinrichtung (2) auf, die von der Steuereinheit (21) in Abhängigkeit der von dem Bewegungserkennungssystem (20) gegebenen Bewegungsinformationen derart ansteuerbar ist, dass sie entweder einen Kraftübertragungszustand oder einen Lösezustand einnimmt;
- die Kupplungseinrichtung (2) umfasst ein erstes Kupplungsteil (22) und ein zweites Kupplungsteil (23), die im Kraftübertragungszustand die Bremskraft an die zumindest eine Radbremse (12) weiterleiten, während sie im Lösezustand die Übertragung der Bremskraft zur zumindest einen Radbremse (12) verhindern,
- die Kupplungseinrichtung (2) umfasst einen von der Steuereinheit (21) in Abhängigkeit der Bewegungsinformationen angesteuerten Elektromagneten (24), der in einem aktivierten Zustand das erste Kupplungsteil (22) vom zweiten Kupplungsteil (23) abhebt, wodurch die Kupplungseinrichtung (2) in ihren Lösezustand gebracht wird.

2. Auflaufbremsanlage gemäß Anspruch 1, **gekennzeichnet durch** folgende Merkmale:
- die Bremskraftübertragungseinrichtung (11) umfasst ein erstes und ein zweites Kraftübertragungsteil (11₁, 11₂) ;
- ein erstes Ende (11₁ₐ) des ersten Kraftübertragungsteils (11₁) ist mit einem ersten Ende (22₁) des ersten Kupplungsteils (22) verbunden;
- ein erstes Ende (11₂ₐ) des zweiten Kraftübertragungsteils (11₂) ist mit einem ersten Ende (23₁) des zweiten Kupplungsteils (23) verbunden;
- ein zweites Ende (11_{2b}) des zweiten Kraftübertragungsteils (11₂) ist mittelbar oder unmittelbar mit der zumindest einen Radbremse (12) verbunden.

3. Auflaufbremsanlage gemäß Anspruch 1 oder 2, **gekennzeichnet durch** folgende Merkmale:
- das erste Kupplungsteil (22) und das zweite Kupplungsteil (23) sind im Lösezustand in axialer Richtung zueinander verschiebbar; und/oder
- der Elektromagnet (24) drückt oder zieht oder dreht beide Kupplungsteile (22, 23) auseinander.

4. Auflaufbremsanlage gemäß einem der vorhergehenden Ansprüche, **gekennzeichnet durch** folgende Merkmale:
- das erste Kupplungsteil (22) der Kupplungseinrichtung (2) umfasst eine erste Kontaktfläche (30) und das zweite Kupplungsteil (23) der Kupplungseinrichtung (2) umfasst eine zweite Kontaktfläche (31);
- beide Kontaktflächen (30, 31) liegen einander gegenüber und sind relativ zueinander zwischen einer aufeinanderliegenden Kontaktposition und einer beabstandeten Löseposition bewegbar.

5. Auflaufbremsanlage gemäß Anspruch 4, **gekennzeichnet durch** folgende Merkmale:
- die erste Kontaktfläche (30) ist mit einer sägezahnartigen Kontur (32) versehen, die sich in Längsrichtung erstreckt und mehrere Sägezähne (33) aufweist, die in eine bestimmte Richtung zeigen;
- die zweite Kontaktfläche (31) ist mit einer sägezahnartigen Kontur (34) versehen, die sich in Längsrichtung erstreckt und mehrere Sägezähne (35) aufweist, die in eine entgegengesetzte Richtung wie die Sägezähne (33) der ersten Kontaktfläche (30) zeigen;
- im Kraftübertragungszustand greifen die Sägezähne (33) der ersten und zweiten Kontaktfläche derart (30, 31) ineinander, dass eine Kraft in Axialrichtung der angrenzenden Kraftübertragungsteile (11₁, 11₂)übertragbar ist.

6. Auflaufbremsanlage gemäß Anspruch 5, **gekennzeichnet durch** folgende Merkmale:
- eine ansteigende bzw. abfallende Flanke der Sägezähne (33) des ersten Kupplungsteils (22), welche eine steilere Steigung aufweist, ist so bemessen, dass der Winkel zu einer Senkrechten durch das erste Kupplungsteil (22) in etwa dem arctan des Reibwerts entspricht, den die Sägezähne (33) aufweisen; und/oder
- eine ansteigende bzw. abfallende Flanke der Sägezähne (35) des zweiten Kupplungsteils (23), welche eine steilere Steigung aufweist, ist so bemessen, dass der Winkel zu einer Senkrechten durch das zweite Kupplungsteil (23) in etwa dem arctan des Reibwerts entspricht, den die Sägezähne (35) aufweisen.

7. Auflaufbremsanlage nach einem der vorhergehenden Ansprüche, **gekennzeichnet durch** folgende Merkmale:
- die Kupplungseinrichtung (2) umfasst zumindest eine Spannfeder (40, 41);
- die zumindest eine Spannfeder (40, 41) ist mit einem ersten Ende (40₁, 41₁) am ersten Kupplungsteil (22) und mit einem zweiten Ende (40₂, 41₂) am zweiten Kupplungsteil (23) befestigt und erstreckt sich derart schräg über beide Kupplungsteile (22, 23), dass sie sowohl eine Kraft in Längsrichtung der Bremskraftübertragungseinrichtung (11) als auch eine Kraft ausübt, welche die Kupplungsteile (22, 23) in den Kraftübertragungszustand drängt.

8. Auflaufbremsanlage nach einem der vorhergehenden Ansprüche, **gekennzeichnet durch** folgende Merkmale:
- das erste Ende (22₁) des ersten Kupplungsteils (22) weist einen ersten Anschlag (45) auf, der in Richtung des zweiten Kupplungsteils (23) gerichtet ist und der in Kontakt mit einem zweiten Ende (23₂) des zweiten Kupplungsteils (23) bringbar ist; und/oder
- das erste Ende (23₁) des zweiten Kupplungsteils (23) weist einen zweiten Anschlag (46) auf, der in Richtung des ersten Kupplungsteils (22) gerichtet ist und der in Kontakt mit einem zweiten Ende (22₂) des ersten Kupplungsteils (22) bringbar ist.

9. Auflaufbremsanlage nach einem der Ansprüche 2 bis 8, **gekennzeichnet durch** folgende Merkmale:
- das erste Kupplungsteil (22) umfasst eine sich in Längsrichtung erstreckende längliche Führungsausnehmung (50);
- mit dem zweiten Kupplungsteil (23) ist ein erstes Ende (51₁) eines Führungsstifts (51) verbunden, wobei sich der Führungsstift (51) durch die Führungsausnehmung (50) des ersten Kupplungsteils (22) hindurcherstreckt;
- der Elektromagnet (24) ist mit einem zweiten Ende (51₂) des Führungsstifts (51) verbunden;
oder
- das zweite Kupplungsteil (23) umfasst eine sich in Längsrichtung erstreckende längliche Führungsausnehmung (50) ;
- mit dem ersten Kupplungsteil (22) ist ein erstes Ende (51₁) eines Führungsstifts (51) verbunden, wobei sich der Führungsstift (51) durch die Führungsausnehmung (50) des zweiten Kupplungsteils (23) hindurcherstreckt;
- der Elektromagnet (24) ist mit einem zweiten Ende (51₂) des Führungsstifts (51) verbunden.

10. Auflaufbremsanlage nach Anspruch 9, **gekennzeichnet durch** folgendes Merkmal:
- der Elektromagnet (24) weist einen konstanten Abstand zu demjenigen Kupplungsteil (22, 23) auf, das mit dem ersten Ende (51₁) des Führungsstifts (51) verbunden ist.

11. Auflaufbremsanlage nach Anspruch 9 oder 10, **gekennzeichnet durch** folgendes Merkmal:
- dasjenige Kupplungsteil (22, 23), welches die Führungsausnehmung (50) umfasst, weist eine ferromagnetische Schicht (52) auf, wodurch bei aktiviertem Elektromagneten (24) das erste bzw. zweite Kupplungsteil (22, 23) vom jeweils anderen Kupplungsteil (23, 22) abgehoben wird.

12. Auflaufbremsanlage nach Anspruch 11, **gekennzeichnet durch** folgendes Merkmal:
- die ferromagnetische Schicht (52) ist um die Führungsausnehmung (50) herum angeordnet.

13. Auflaufbremsanlage nach einem der Ansprüche 9 bis 12, **gekennzeichnet durch** folgendes Merkmal:
- eine Feder (53) ist zwischen dem Elektromagneten (24) und demjenigen Kupplungsteil (22, 23), welches die Führungsausnehmung (50) umfasst, angeordnet, wobei eine Federkraft der Feder (53) der Kraft des Elektromagneten (24) entgegenwirkt, wodurch bei deaktiviertem Elektromagneten (24) das erste bzw. zweite Kupplungsteil (22, 23) in Richtung des zweiten bzw. ersten Kupplungsteils (23, 22) gedrückt wird.

14. Auflaufbremsanlage nach einem der Ansprüche 9 bis 13, **gekennzeichnet durch** folgendes Merkmal:
- der Führungsstift (51) erstreckt sich durch die Feder (53) hindurch und ist als Stützeinrichtung für die Feder (53) ausgebildet.

15. Auflaufbremsanlage nach einem der vorherigen Ansprüche, **gekennzeichnet durch** folgendes Merkmal:
- das Bewegungserkennungssystem (20) umfasst zumindest eine Radareinheit, mit welcher der Bewegungszustand des Kraftfahrzeuganhängers durch Detektieren der Fahrbahnoberfläche bestimmbar ist.

## Claims

1. Overrun brake for a motor vehicle trailer, comprising:
- at least one wheel brake (12);
- a mechanical brake force transmission device (11) which is operatively connected to the at least one wheel brake (12);
- a control unit (21);
- a motion detection system (20) for detecting movement information such as standstill or a direction of movement of the motor vehicle trailer;
- the motion detection system (20) being connected to the control unit (21);
**characterised by** the following features:
- the mechanical brake force transmission device (11) has a detachable coupling device (2), which can be controlled by the control unit (21) on the basis of the movement information generated by the motion detection system (20) such that said device assumes either a force transmission state or a release state;
- the coupling device (2) comprises a first coupling part (22) and a second coupling part (23), which transfer the brake force to the at least one wheel brake (12) when in the force transmission state and prevent the transmission of the brake force to the at least one wheel brake (12) when in the release state,
- the coupling device (2) comprises an electromagnet (24), which is controlled by the control unit (21) on the basis of the movement information and which, when in an activated state, removes the first coupling part (22) from the second coupling part (23), as a result of which the coupling device (2) is brought into its release state.

2. Overrun brake according to claim 1, **characterised by** the following features:
- the brake force transmission device (11) comprises a first and a second force transmission part (11₁, 11₂);
- a first end (11₁ₐ) of the first force transmission part (11₁) is connected to a first end (22₁) of the first coupling part (22);
- a first end (11₂ₐ) of the second force transmission part (11₂) is connected to a first end (23₁) of the second coupling part (23);
- a second end (11_{2b}) of the second force transmission part (11₂) is indirectly or directly connected to the at least one wheel brake (12).

3. Overrun brake according to either claim 1 or claim 2, **characterised by** the following features:
- the first coupling part (22) and the second coupling part (23) can be moved towards one another in the axial direction when in the release state; and/or
- the electromagnet (24) pushes or pulls or rotates the two coupling parts (22, 23) apart.

4. Overrun brake according to any of the preceding claims, **characterised by** the following features:
- the first coupling part (22) of the coupling device (2) comprises a first contact surface (30), and the second coupling part (23) of the coupling device (2) comprises a second contact surface (31);
- the two contact surfaces (30, 31) are opposite one another and can be moved relative to one another between a contact position in which they are positioned on top of one another and a release position in which they are spaced apart.

5. Overrun brake according to claim 4, **characterised by** the following features:
- the first contact surface (30) has a saw-tooth-like contour (32) which extends in the longitudinal direction and has a plurality of saw teeth (33) that point in a particular direction;
- the second contact surface (31) has a saw-tooth-like contour (34) which extends in the longitudinal direction and has a plurality of saw teeth (35) that point in an opposite direction to the saw teeth (33) of the first contact surface (30);
- when in the force transmission state, the saw teeth (33) of the first and second contact surfaces (30, 31) mutually engage such that a force can be transmitted in the axial direction of the adjacent force transmission parts (11₁, 11₂).

6. Overrun brake according to claim 5, **characterised by** the following features:
- a rising or falling flank of the saw teeth (33) of the first coupling part (22), which flank has a steeper incline, is dimensioned such that the angle to a vertical line through the first coupling part (22) corresponds approximately to the arctan of the friction coefficient that the saw teeth (33) have; and/or
- a rising or falling flank of the saw teeth (35) of the second coupling part (23), which flank has a steeper incline, is dimensioned such that the angle to a vertical line through the second coupling part (23) corresponds approximately to the arctan of the friction coefficient that the saw teeth (35) have.

7. Overrun brake according to any of the preceding claims, **characterised by** the following features:
- the coupling device (2) comprises at least one tension spring (40, 41);
- the at least one tension spring (40, 41) is fastened to the first coupling part (22) by a first end (40₁, 41₁) and to the second coupling part (23) by a second end (40₂, 41₂), and extends obliquely over the two coupling parts (22, 23) such that it exercises both a force in the longitudinal direction of the brake force transmission device (11) and a force which pushes the coupling parts (22, 23) into the force transmission state.

8. Overrun brake according to any of the preceding claims, **characterised by** the following features:
- the first end (22₁) of the first coupling part (22) has a first stop (45) which faces the second coupling part (23) and can be brought into contact with a second end (23₂) of the second coupling part (23); and/or
- the first end (23₁) of the second coupling part (23) has a second stop (46) which faces the first coupling part (22) and can be brought into contact with a second end (22₂) of the first coupling part (22).

9. Overrun brake according to any of claims 2 to 8, **characterised by** the following features:
- the first coupling part (22) comprises an elongate guide recess (50) which extends in the longitudinal direction;
- a first end (51₁) of a guide pin (51) is connected to the second coupling part (23), the guide pin (51) extending through the guide recess (50) of the first coupling part (22);
- the electromagnet (24) is connected to a second end (51₂) of the guide pin (51);
or
- the second coupling part (23) comprises an elongate guide recess (50) which extends in the longitudinal direction;
- a first end (51₁) of a guide pin (51) is connected to the first coupling part (22), the guide pin (51) extending through the guide recess (50) of the second coupling part (23);
- the electromagnet (24) is connected to a second end (51₂) of the guide pin (51).

10. Overrun brake according to claim 9, **characterised by** the following feature:
- the electromagnet (24) has a constant distance with respect to the coupling part (22, 23) that is connected to the first end (51₁) of the guide pin (51).

11. Overrun brake according to either claim 9 or claim 10, **characterised by** the following feature:
- the coupling part (22, 23) that comprises the guide recess (50) has a ferromagnetic layer (52), and the first or second coupling part (22, 23) is therefore removed from the relevant other coupling part (23, 22) when the electromagnet (24) is activated.

12. Overrun brake according to claim 11, **characterised by** the following feature:
- the ferromagnetic layer (52) is arranged around the guide recess (50).

13. Overrun brake according to any of claims 9 to 12, **characterised by** the following feature:
- a spring (53) is arranged between the electromagnet (24) and the coupling part (22, 23) that comprises the guide recess (50), a spring force of the spring (53) counteracting the force of the electromagnet (24), and the first or second coupling part (22, 23) therefore being pushed towards the second or first coupling part (23, 22) when the electromagnet is deactivated (24).

14. Overrun brake according to any of claims 9 to 13, **characterised by** the following feature:
- the guide pin (51) extends through the spring (53) and is designed as a support device for the spring (53).

15. Overrun brake according to any of the preceding claims, **characterised by** the following feature:
- the motion detection system (20) comprises at least one radar unit, by means of which the state of movement of the motor vehicle trailer can be determined by detecting the road surface.

## Revendications

1. Installation de frein à inertie pour remorque de véhicule, comportant :
- au moins un frein de roue (12) ;
- un dispositif mécanique (11) de transmission des forces de freinage qui est en liaison d'action avec ledit au moins un frein de roue (12) ;
- une unité de commande (21) ;
- un système de reconnaissance de mouvement (20) pour reconnaître des informations de mouvement, telles qu'un arrêt ou une direction de mouvement de la remorque de véhicule ;
- le système de reconnaissance de mouvement (20) étant connecté à l'unité de commande (21) ;
**caractérisée en ce que** :
- le dispositif mécanique (11) de transmission des forces de freinage comprend un moyen d'accouplement détachable (2) qui est pilotable par l'unité de commande (21) en fonction des informations de mouvement données par le système de reconnaissance de mouvement (20), de telle sorte qu'il occupe soit un état de transmission des forces soit un état détaché ;
- le moyen d'accouplement (2) comprend une première partie d'accouplement (22) et une seconde partie d'accouplement (23) qui transmettent les forces de freinage audit au moins un frein de roue (12) dans l'état de transmission des forces, tandis qu'elles empêchent la transmission des forces de freinage vers ledit au moins un frein de roue (12) dans l'état détaché,
- le moyen d'accouplement (2) comprend un électroaimant (24) piloté en fonction des informations de mouvement et soulevant la première partie d'accouplement (22) vis-à-vis de la seconde partie d'accouplement (23) dans un état activé, ce qui ramène le moyen d'accouplement (2) dans son état détaché.

2. Installation de frein à inertie selon la revendication 1,
**caractérisée en ce que**
- le dispositif (11) de transmission des forces de freinage comprend une première et une seconde partie de transmission des forces (11₁, 11₂) ;
- une première extrémité (11₁ₐ) de la première partie de transmission des forces (11₁) est reliée à une première extrémité (22₁) de la première partie d'accouplement (22) ;
- une première extrémité (11₂ₐ) de la seconde partie de transmission des forces (11₂) est reliée à une première extrémité (23₁) de la seconde partie d'accouplement (23) ;
- une seconde extrémité (11_{2b}) de la seconde partie de transmission des forces (11₂) est reliée directement ou indirectement audit au moins un frein de roue (12).

3. Installation de frein à inertie selon la revendication 1 ou 2,
**caractérisée en ce que**
- la première partie d'accouplement (22) et la seconde partie d'accouplement (23) sont mobiles en translation l'une par rapport à l'autre en direction axiale, dans l'état détaché ; et/ou
- l'électroaimant (24) pousse ou tire ou fait tourner les deux parties d'accouplement (22, 23) l'une en éloignement de l'autre.

4. Installation de frein à inertie selon l'une des revendications précédentes,
**caractérisée en ce que**
- la première partie d'accouplement (22) du moyen d'accouplement (2) comprend une première surface de contact (30) et la seconde partie d'accouplement (23) du moyen d'accouplement (2) comprend une seconde surface de contact (31) ;
- les deux surfaces de contact (30, 31) sont opposées l'une à l'autre et sont mobiles l'une par rapport à l'autre entre une position de contact superposée et une position détachée écartée.

5. Installation de frein à inertie selon la revendication 4,
**caractérisée en ce que**
- la première surface de contact (30) est pourvue d'un contour (32) en forme de dents de scie qui s'étend en direction longitudinale et qui comprend plusieurs dents de scie (33) qui pointent dans une direction déterminée ;
- la seconde surface de contact (31) est pourvue d'un contour (34) en forme de dents de scie qui s'étend en direction longitudinale et qui comprend plusieurs dents de scie (35) qui pointent dans une direction opposée à celle des dents de scie (33) de la première surface de contact (30) ;
- dans l'état de transmission des forces, les dents de scie (33) de la première et de la seconde surface de contact viennent s'engager les unes dans les autres (30, 31) de telle sorte qu'une force est transmissible en direction axiale des parties de transmission des forces (11₁, 11₂) adjacentes.

6. Installation de frein à inertie selon la revendication 5,
**caractérisée en ce que**
- un flanc montant ou descendant des dents de scie (33) de la première partie d'accouplement (22) qui présente une pente plus raide est dimensionné de telle sorte que l'angle par rapport à une perpendiculaire à travers la première partie d'accouplement (22) correspond approximativement à la valeur arctan du coefficient de friction que présentent les dents de scie (33) ; et/ou
- un flanc montant ou descendant des dents de scie (35) de la seconde partie d'accouplement (23) qui présente une pente plus raide est dimensionné de telle sorte que l'angle par rapport à une perpendiculaire à travers la seconde partie d'accouplement (23) correspond approximativement à la valeur arctan du coefficient de friction que présentent les dents de scie (35).

7. Installation de frein à inertie selon l'une des revendications précédentes,
**caractérisée en ce que**
- le moyen d'accouplement (2) comprend au moins un ressort de serrage (40, 41) ;
- ledit au moins un ressort de serrage (40, 41) est fixé par une première extrémité (40₁, (51₁) sur la première partie d'accouplement (22) et par une seconde extrémité (40₂, 41₂) sur la seconde partie d'accouplement (23) et s'étend en oblique sur les deux parties d'accouplement (22, 23) de manière à exercer aussi bien une force en direction longitudinale du dispositif (11) de transmission des forces de freinage qu'une force repoussant les parties d'accouplement (22, 23) dans l'état de transmission de forces.

8. Installation de frein à inertie selon l'une des revendications précédentes,
**caractérisée en ce que**
- la première extrémité (22₁) de la première partie d'accouplement (22) comprend une première butée (45) qui est dirigée en direction de la seconde partie d'accouplement (23) et qui est susceptible d'être amenée en contact avec une seconde extrémité (23₂) de la seconde partie d'accouplement (23) ; et/ou
- la première extrémité (23₁) de la seconde partie d'accouplement (23) comprend une seconde butée (46) qui est dirigée en direction de la première partie d'accouplement (22) et qui est susceptible d'être amenée en contact avec une seconde extrémité (22₂) de la première partie d'accouplement (22).

9. Installation de frein à inertie selon l'une des revendications 2 à 8,
**caractérisée en ce que**
- la première partie d'accouplement (22) comprend un évidement de guidage oblong (50) qui s'étend en direction longitudinale ;
- une première extrémité (51₁) d'une tige de guidage (51) est reliée à la seconde partie d'accouplement (23), la tige de guidage (51) traversant l'évidement de guidage (50) de la première partie d'accouplement (22) ;
- l'électroaimant (24) est relié à une seconde extrémité (51₂) de la tige de guidage (51) ;
ou
- la seconde partie d'accouplement (23) comprend un évidement de guidage oblong (50) qui s'étend en direction longitudinale ;
- une première extrémité (51₁) d'une tige de guidage (51) est reliée à la première partie d'accouplement (22), la tige de guidage (51) traversant l'évidement de guidage (50) de la seconde partie d'accouplement (23) ;
- l'électroaimant (24) est relié à une seconde extrémité (51₂) de la tige de guidage (51).

10. Installation de frein à inertie selon la revendication 9,
**caractérisée en ce que**
- l'électroaimant (24) présente une distance constante à cette partie d'accouplement (22, 23) qui est reliée à la première extrémité (51₁) de la tige de guidage (51).

11. Installation de frein à inertie selon la revendication 9 ou 10,
**caractérisée en ce que**
- cette partie d'accouplement (22, 23) qui présente l'évidement de guidage (50) présente une couche ferromagnétique (52) grâce à laquelle la première ou la seconde partie d'accouplement (22, 23) est soulevée vis-à-vis de l'autre partie d'accouplement respective (23, 22), l'électroaimant (24) étant activé.

12. Installation de frein à inertie selon la revendication 11,
**caractérisée en ce que**
- la couche ferromagnétique (52) est agencée tout autour de l'évidement de guidage (50).

13. Installation de frein à inertie selon l'une des revendications 9 à 12,
**caractérisée en ce que**
- un ressort (53) est agencé entre l'électroaimant (24) et cette partie d'accouplement (22, 23) qui présente l'évidement de guidage (50), une force élastique du ressort (53) venant contrecarrer la force de l'électroaimant (24), grâce à quoi la première ou la seconde partie d'accouplement (22, 23) est poussée en direction de la seconde ou de la première partie d'accouplement (23, 22) lorsque l'électroaimant (24) est désactivé.

14. Installation de frein à inertie selon l'une des revendications 9 à 13,
**caractérisée en ce que**
- la tige de guidage (51) traverse le ressort (53) et est réalisée à titre de moyen d'appui pour le ressort (53).

15. Installation de frein à inertie selon l'une des revendications précédentes,
**caractérisée en ce que**
- le système de reconnaissance de mouvement (20) comprend au moins une unité à radar qui permet de déterminer l'état de mouvement de la remorque de véhicule par détection de la surface de la chaussée.
